# FASCICULE DE BREVET EUROPEEN

(11) **EP 3 223 598 B1**
(45) Date de publication et mention de la délivrance du brevet: **07.08.2019**
(21) Numéro de dépôt: 15804876.9
(22) Date de dépôt: 03.11.2015
(51) Int. Cl.: B23D 29/02, B23Q 17/24, G01B 11/14, H02P 1/02, A01G 3/037

(54) **PROCÉDÉ ET DISPOSITIF DE COMMANDE POUR ÉQUIPEMENT À MOTEUR**
STEUERUNGSVERFAHREN UND -VORRICHTUNG FÜR EINE ANGETRIEBENE EINRICHTUNG
CONTROL METHOD AND DEVICE FOR POWERED EQUIPMENT

(30) Priorité: 25.11.2014 FR 1461404
(43) Date de publication de la demande: 04.10.2017
(73) Titulaire: PELLENC, 84120 Pertuis (FR)
(72) Inventeur: PELLENC, Roger, 84120 Pertuis (FR); GILBERT, Philippe, 13610 Le Puy Sainte Reparade (FR); LOPEZ, Bernard, 84240 La Tour d'Aigues (FR)
(74) Mandataire: Weber, Etienne Nicolas
(86) Numéro de dépôt international: PCT/FR2015/052963
(87) Numéro de publication internationale: WO 2016/083694

(56) Documents cités:
- EP-A1- 2 156 732
- EP-A1- 2 163 853
- EP-A1- 2 659 765
- FR-A1- 2 614 568
- FR-A1- 2 957 834
- US-A1- 2003 144 774

## Description

### Domaine technique

La présente invention concerne la commande d'équipements à moteur. Elle concerne en particulier la commande d'outils portatifs, actionnés par la main de l'utilisateur. L'invention trouve des applications pour des équipements à moteur thermique, tels que des tronçonneuses, ou pour des équipements à moteur électrique alimentés par le secteur, par une batterie insérée dans le corps de l'outil ou une batterie située à distance de l'outil et pouvant être portée par l'utilisateur. Parmi les équipements ou outils visés on peut encore citer, les sécateurs, les cisailles à tôle, les taille haie, les souffleurs, les débroussailleuses, les peigne à olives, et les tondeuses, électriques ou thermiques. De manière plus générale, l'invention trouve des applications pour tout type d'outils à moteur dans des domaines professionnels de l'entretien des espaces verts, du bâtiment ou du domaine médical. Elle trouve également des applications pour des outillages concernant le grand public, ainsi que des équipements électroménagers.

### Etat de la technique

Les équipements mentionnés ci-dessus ont pour points communs un moteur et un organe de commande du moteur actionnable par la main ou le doigt de l'utilisateur, voire même son pied.

Bien que quelques outils fonctionnent simplement à l'aide d'un interrupteur autorisant la mise en marche ou l'arrêt du moteur par l'action singulière et momentanée du pied, de la main ou du doigt sur l'interrupteur, une grande majorité d'entre eux disposent d'un organe de commande plus sophistiqué. Il s'agit, par exemple, d'une gâchette de commande, manoeuvrable par un ou plusieurs doigts, entre une position de repos, quand aucune action n'est exercée sur la gâchette, et une position de course maximale représentant la fin de la course de la gâchette. Ce type de gâchette dispose généralement de moyens permettant son rappel automatique vers la position de repos dès le relâchement de l'action sur la gâchette. Les moyens de rappel sont le plus souvent des moyens élastiques, tels qu'un ressort. Il en est de même pour des organes de commande commandés par le pied de l'utilisateur, la gâchette étant alors remplacée par une pédale. La suite de la description fait référence à un organe de commande actionné à la main. Il est toutefois précisé qu'un organe de commande actionné au pied peut présenter les mêmes fonctionnalités. En revanche l'outil ou la machine peuvent alors présenter des fonctionnalités différentes. Il peut s'agir d'équipements non portables, par exemple.

A la position de repos de la gâchette, correspond en général un mode de repos du moteur. Il peut s'agir de l'arrêt pour un moteur électrique, ou du ralenti pour un moteur thermique. A l'inverse, pour la position de course maximale de la gâchette, le moteur fonctionne généralement à une puissance maximale prédéfinie. Dans des positions intermédiaires de la gâchette, le moteur fonctionne à une puissance intermédiaire proportionnelle ou non à l'enfoncement de la gâchette. Ceci est le cas, par exemple, des tronçonneuses thermiques où le moteur tourne au ralenti quand la gâchette est en position de repos, et tourne à sa vitesse maximale prédéfinie quand la gâchette est en position de course maximale. Dans l'exemple particulier d'une tronçonneuse, le moteur entraine un organe actif, qui se trouve être la chaîne de coupe.

Ainsi, et de la même façon, l'organe de commande des équipements ou outils à moteur a pour fonction finale de commander les mouvements d'un organe actif correspondant.

Les organes actifs d'un outil portatif, malgré la rotation continue du moteur lors de l'actionnement de l'organe de commande, ne sont pas nécessairement animés d'un mouvement en rotation. En effet, à une position donnée de la gâchette peut être associée simplement une position correspondante de l'organe actif de l'outil portatif. L'organe actif a ainsi une position de repos correspondant à la gâchette en position de repos, une position de course maximale quand la gâchette est en position de course maximale, et une position intermédiaire entre sa position de repos et sa position de course maximale correspondant à une position intermédiaire de la gâchette. Ceci est le cas, par exemple, d'un sécateur électrique tel que décrit dans le document FR2614568 de la déposante. Ce sécateur possède un organe actif de coupe avec une lame fixe et une lame mobile. La lame mobile est actionnée par un moteur électrique. Une gâchette permet de commander la position de la lame mobile par rapport à la lame fixe entre une position de pleine ouverture, qui est une position de repos, et une position de fermeture permettant le chevauchement de la lame mobile sur la contre lame fixe pour assurer la coupe. Ainsi, la position de la lame mobile est asservie à la position relative de la gâchette entre sa position de repos et sa position de course maximale. Elle peut ainsi être maitrisée en continu par l'utilisateur qui actionne la gâchette avec un doigt ou sa main. De manière plus précise, la gâchette commande la rotation du moteur dans un sens de rotation ou dans un sens inverse selon le sens d'actionnement de la gâchette. Le moteur est relié à une came de la lame mobile par l'intermédiaire d'une transmission convertissant la rotation du moteur en un mouvement de translation. Le mouvement de translation, appliqué à la came provoque l'ouverture ou la fermeture de la lame mobile.

Un certain nombre d'outils apportent, en plus, la possibilité à l'utilisateur de commander des fonctions complémentaires telles que la puissance maximale prédéfinie du moteur, la position de course maximale de l'organe actif, la mise en veille de l'outil, etc...

A titre d'illustration, le document FR2973815 de la déposante décrit un souffleur électroportatif dont la vitesse d'air est modulée par la position de la gâchette située en dessous de la poignée du souffleur. Un bouton poussoir supplémentaire situé au-dessus de la poignée agit sur la sélection de la vitesse d'air maximale en sortie du souffleur par une limitation de la puissance maximale développée par le moteur. Le bouton peut être actionné par un deuxième doigt de la main qui actionne la gâchette. Cela nécessite toutefois une attention particulière de l'utilisateur qui doit coordonner le mouvement d'un deuxième doigt de sa main pour exercer un effort supplémentaire, dans une direction qui se trouve être antagoniste à l'effort exercé sur la gâchette.

Le document EP2156732 de la déposante décrit un sécateur électrique comportant une gâchette principale et une deuxième gâchette reliée à la gâchette principale. La deuxième gâchette peut être actionnée par le même doigt que la gâchette principale. Elle commande au moins une fonction supplémentaire de l'outil tel qu'un changement de la position de course maximale de la lame mobile par rapport à la lame fixe. L'actionnement de la deuxième gâchette nécessite de la part de l'utilisateur un déplacement du doigt sur la gâchette principale dans une direction permettant le mouvement de deuxième gâchette, soit dans une direction sensiblement perpendiculaire au mouvement de la gâchette principale. Ce mouvement n'est pas dans la continuité du mouvement du doigt pour l'actionnement de la fonction principale et provoque ainsi une gêne et une perte de temps pour l'utilisateur.

Le document EP2659765 décrit un outil électroportatif tel qu'un sécateur électrique dont le système de commande est conçu pour détecter une séquence de déplacement prédéterminée de la gâchette, par exemple, un double actionnement rapide de la gâchette. Une fonction supplémentaire correspond dans ce cas à la détection de la séquence prédéterminée. L'utilisateur doit ainsi coordonner de rapides séquences d'effort de son doigt, pour obtenir la fonction supplémentaire souhaitée. Cet exercice n'est pas inscrit dans un mouvement naturel du doigt de la main suite aux changements de fréquence d'actionnement de la gâchette et, s'il est souvent répété, peut entraîner des troubles au niveau du doigt voire de la main.

Le document US2003/0144774A1 décrit un kit pour convertir une tondeuse à gazon conventionnelle en une tondeuse à gazon automatisée, apte à déterminer si un objet se trouve dans une zone d'interface de sécurité et à commander une fonction de sécurité en réponse à la présence d'un objet dans la zone d'interface de sécurité.

### Exposé de l'invention

L'invention vise à surmonter les inconvénients exposés ci-dessus. Elle vise également à fournir un procédé et un dispositif de commande pour un équipement à moteur, et en particulier d'un outil portatif facilitant l'exercice d'une double commande. L'invention a encore pour but de proposer un dispositif de commande, à commande multiple, compatible avec un mouvement naturel de la main ou du doigt actionnant une fonction principale.

Pour atteindre ces buts, l'invention propose plus précisément un dispositif de commande pour un équipement à moteur, comprenant au moins un capteur électronique et une carte électronique de commande de l'équipement en fonction d'au moins un signal de commande du capteur. Conformément à l'invention, le capteur électronique est un capteur optique sans contact ménagé dans une zone d'interface du dispositif de commande. Il est configuré pour mesurer une distance le séparant d'une cible qui se trouve dans la zone d'interface. La carte électronique est configurée pour établir une première commande d'une fonction principale de l'équipement à moteur, lorsqu'un signal du capteur optique est établi pour une distance mesurée dans au moins une première plage de distances, et pour établir une commande d'au moins une fonction supplémentaire de l'équipement à moteur, distincte de la fonction principale, lorsqu'un signal du capteur optique est établi pour une distance de mesure supérieure à la première plage de distances.

Le dispositif de commande de l'invention peut être adapté à tout équipement pourvu d'un moteur électrique ou thermique. L'équipement peut être un équipement fixe ou portable.

La carte électronique reçoit un signal de commande du capteur optique. Ceci ne préjuge pas de la forme du signal. Il peut s'agir d'un signal plus ou moins complexe, analogique ou numérique. Il peut aussi s'agir très simplement d'un courant ou d'une tension représentative de la mesure de distance.

Un type de capteur optique sans contact utilisable dans le dispositif de commande est disponible commercialement auprès de la société Avago Technologies avec la référence APDS-9190. Un tel capteur dispose d'une source de rayonnement, tel qu'une diode électroluminescente émettant dans le spectre de l'infrarouge proche. La lumière émise par la source vient illuminer la cible. Une partie de la lumière rétrodiffusée par la cible est reçue et mesurée par un photorécepteur. Il s'agit d'une ou de ou plusieurs photodiodes. La part de lumière reçue par les diodes varie inversement avec la distance qui sépare la cible du photorécepteur, en l'occurrence les photodiodes. La lumière de mesure peut être modulée de manière à soustraire plus facilement l'influence de la lumière ambiante.

Il convient de noter ici que la cible visée par le capteur optique sans contact peut être un doigt de l'utilisateur, ganté ou non, la main de l'utilisateur, gantée ou non, ou encore, dans des applications particulières, le pied de l'utilisateur, chaussé ou non. La cible peut aussi être un organe de commande, c'est-à-dire une gâchette ou une pédale.

Ainsi, la zone d'interface du dispositif de commande se situe dans le champ de mesure du capteur optique, c'est-à-dire le champ d'émission de la lumière de mesure et de capture de la lumière rétrodiffusée. La zone d'interface est de préférence délimitée matériellement par une garde ménageant un espace d'actionnement autour du capteur. L'espace d'actionnement est dimensionné de manière à recevoir la cible avec une possibilité de mouvement suffisante pour effectuer les commandes, c'est-à-dire supérieure à la première plage de distances.

Dans la première plage de distances, la plus proche du capteur de commande, le signal du capteur peut être utilisé par la carte électronique pour établir une première commande d'une fonction principale. Il peut typiquement s'agir d'une commande du moteur comme sa vitesse de rotation.

Par exemple, à une cible positionnée à l'extrémité de la première plage de distances, c'est-à-dire à la plus grande distance de cette plage, peut correspondre l'arrêt du moteur, notamment lorsqu'il s'agit d'un moteur électrique, ou un régime de ralenti du moteur, lorsqu'il s'agit d'un moteur thermique. Cette distance est désignée par « distance proximale maximum » dans la suite du texte. A l'inverse, à une cible positionnée au plus près du capteur, c'est-à-dire à la plus petite distance dans la première plage de distances, peut correspondre une rotation à une vitesse maximale de consigne prédéfinie du moteur. Cette distance est désignée par « distance proximale minimum » dans la suite du texte. A des positions intermédiaires de la cible, c'est-à-dire entre la distance proximale minimum et la distance proximale maximum, peuvent correspondre des vitesses de rotation intermédiaires entre l'arrêt et la vitesse de rotation maximum de consigne. La vitesse de rotation du moteur peut être proportionnelle ou non à la distance mesurée par le capteur.

La première commande d'une fonction principale de l'équipement établie par la carte à partir du signal du capteur n'est pas nécessairement une commande de vitesse du moteur mais peut être la position relative d'un organe actif. Une illustration peut en être donnée pour un sécateur ayant une lame mobile entre une position ouverte et une position fermée sur une lame fixe. La position ouverte correspond par exemple à une cible située à la distance proximale maximum du capteur tandis que la position fermée correspond à une cible située à la distance proximale minimum du capteur. Aux distances intermédiaires de la cible peuvent correspondre des positions intermédiaires de la lame entre sa position ouverte et sa position fermée. Ces positions intermédiaires peuvent correspondre à des angles d'ouverture proportionnels ou non à la distance de la cible. Selon un autre mode de fonctionnement, il est possible de prévoir des distances de seuil entre la distance proximale minimum et maximum. Dans ce cas le passage de la cible par les distances de seuil provoque respectivement un mouvement brusque de fermeture ou d'ouverture automatique de la lame.

Il est possible de configurer la carte électronique pour distinguer plusieurs plages de distances de la cible pour lesquels une ou plusieurs commandes distinctes d'une fonction principale peuvent être établies. Toutefois l'actionnement d'une telle commande peut être délicat pour un utilisateur non expérimenté. Ainsi, et dans une mise en oeuvre préférée de l'invention, on ne prévoit qu'une seule « première plage de distances ».

Comme mentionné précédemment, la commande de fonction supplémentaire est établie pour des distances supérieures à la première plage de distances, c'est-à-dire lorsque la cible est éloignée du capteur d'une distance supérieure à la distance proximale maximum évoquée ci-dessus. La fonction supplémentaire est de préférence une fonction qui ne vise pas directement la vitesse de rotation du moteur, ou la position de l'organe actif, mais plutôt un mode de rotation ou un mode de fonctionnement de l'organe actif. A titre d'exemple, la fonction supplémentaire peut être une commande de la consigne de vitesse de rotation maximum du moteur. Ainsi, une excursion de la cible, au-delà de la première plage de distance, peut provoquer un changement de consigne. Il s'agit, par exemple d'un passage d'une première consigne de vitesse maximum à une autre consigne de vitesse maximum du moteur, par exemple à une consigne de vitesse maximum supérieure du moteur.

Ceci a alors pour effet de faire atteindre au moteur une vitesse de rotation plus importante avec la commande de la fonction principale, notamment lorsque la cible est à la distance proximale minimum. Une nouvelle excursion de la cible au-delà de la première plage de distances peut provoquer soit un retour à la première consigne de vitesse maximum ou peut provoquer la sélection d'une autre consigne de vitesse maximum, supérieure ou inférieure.

La commande pour la fonction supplémentaire de l'invention peut aussi être une commande de changement de mode de fonctionnement. Il s'agit, par exemple, du passage d'un fonctionnement en tout ou rien en un fonctionnement proportionnel, ou inversement. Dans le cas d'un sécateur, la commande de la fonction supplémentaire peut être le passage d'une commande progressive de la fermeture de la lame à une commande de fermeture à seuil. Dans ce cas également, le changement de mode de fonctionnement peut être provoqué par une excursion de la cible au-delà de la première plage de distances.

En restant dans le contexte d'une application à un sécateur, ou à une cisaille à tôles, la commande de la fonction supplémentaire peut encore correspondre à une consigne d'ouverture maximum de la mâchoire ou une consigne de pivotement maximum de la lame mobile par rapport à la lame fixe. Ainsi, une excursion de la cible au-delà de la première plage de distance permet d'augmenter l'ouverture maximale de la lame dans sa position de repos. Une nouvelle excursion de la cible au-delà de la première plage de distances peut provoquer soit un retour à la première consigne d'ouverture maximum ou peut provoquer la sélection d'une autre consigne d'ouverture maximum, supérieure ou inférieure.

Selon encore une autre possibilité, la commande pour une fonction supplémentaire peut correspondre à une commande de mise en sécurité de l'équipement ou de l'outil, par exemple un arrêt instantané du moteur, ou l'actionnement d'un frein d'urgence ou le blocage de l'organe actif.

La fonction supplémentaire peut encore être une commande d'inversion du sens de rotation du moteur ou de sens d'actionnement de l'organe actif. Une telle fonction peut être utile, par exemple sur un taille-haie, en cas de blocage des lames.

Comme brièvement évoqué ci-dessus, et selon un mode de mise en oeuvre particulier de l'invention le dispositif de commande peut comporter en outre un organe de commande ménagé dans la zone d'interface, et un capteur de position associé à l'organe de commande, le capteur de position étant relié également à la carte électronique de commande.

L'organe de commande est par exemple une gâchette, ou une pédale actionnable à la main, au pied ou par un doigt. Le capteur de position, linéaire ou angulaire, est par exemple un potentiomètre, un capteur à effet hall, ou une magnétorésistance et fournit à la carte électronique un signal mesurant la position relative de l'organe de commande. Le signal peut être un signal analogique ou numérique, plus ou moins sophistiqué. Il peut s'agir aussi très simplement d'un signal de courant ou de tension ou de mesure d'une valeur de résistance.

La présence d'un organe de commande tel qu'une gâchette, outre sa fonction de fournir un moyen d'actionnement pour l'utilisateur a également une fonction d'indexation pour faciliter le positionnement intuitif du doigt ou de la main de l'utilisateur. L'organe de commande facilite aussi la perception de la première zone de distances, pour peu que l'organe de commande ait une course correspondant à cette zone de distances. L'organe de commande en position de repos peut aussi être utilisé comme référence pour un étalonnage automatique de la première plage de distances. Enfin, l'organe de commande chargé par un ressort ou asservi au mouvement de l'organe actif procure encore un rappel de force pour l'utilisateur. Ces caractéristiques augmentent le confort d'utilisation en particulier pour un utilisateur qui n'est pas habitué à l'interface. Enfin, et comme il apparaît dans la suite de la description, un capteur associé à l'organe de commande peut fournir un signal utile à l'établissement d'une commande.

Il est encore possible de prévoir dans la zone d'interface un organe de commande factice, c'est-à-dire un organe qui n'est pas relié à aucun capteur ou actionneur mais qui sert simplement à fournir une indexation pour la position du membre de l'utilisateur, une indexation de la première plage de distances et éventuellement un rappel de force.

L'organe de commande supplémentaire ne fait pas obstacle à la commande établie en fonction de la mesure de distance du capteur optique sans contact. Elle peut au contraire y être associée.

Lorsque l'organe de commande comprend une gâchette actionnable par le doigt de l'utilisateur, et que l'on ne souhaite pas d'interaction entre la gâchette et la mesure de distance du capteur de distance, la gâchette peut être disposée hors du champ de mesure du capteur. Lorsqu'il est difficile de disposer la gâchette hors du champ de mesure du capteur optique, par exemple pour des raisons d'encombrement, elle peut aussi être disposée dans le champ de mesure. Dans ce cas, la gâchette peut servir de cible dans la première plage de distances. La gâchette peut aussi être pourvue d'un ajourage dans une zone d'appui pour le doigt de l'utilisateur, l'ajourage étant aligné sur le champ de mesure optimal du capteur optique. La mesure peut être faite sur le doigt, à travers l'ajourage. Le doigt constitue alors la cible.

Selon la configuration et le type de capteur optique utilisé, la mesure peut aussi avoir lieu dans des zones latérales à proximité immédiate de la gâchette qui restent sensibles pour le capteur. Dans ce cas, le capteur peut aussi détecter la présence du doigt de l'utilisateur. De plus, pour éviter d'éventuelles interférences de la gâchette dans la mesure, celle-ci peut être réalisée en une couleur adaptée, telle qu'une couleur sombre, voire en noir, au moins dans la partie entourant l'ajourage, de manière à ne pas perturber le signal lumineux de mesure.

L'organe de commande, qu'il constitue ou non une cible pour le capteur de distance, présente de préférence une course maximum correspondant à la première plage de distances. Lorsque l'organe de commande est une gâchette, sa position de repos, relâchée, correspond alors de préférence à la distance proximale maximum de la cible, et sa position de fin de course, enfoncée, à la distance proximale minimum de la cible, selon les termes définis plus haut. D'autre part, la position du doigt de l'utilisateur sur la gâchette en position de repos peut être mise à profit pour un étalonnage permanent de la position de repos selon les caractéristiques de couleur et de réflexion du doigt. L'étalonnage, effectué par la carte électronique permet d'identifier clairement l'écartement du doigt par rapport à la position de repos, et hors de la première plage de distances.

Alors que le capteur optique permet de déterminer si une commande de la fonction principale ou une commande de la fonction supplémentaire doit être établie, il convient de préciser que la commande de la fonction principale n'est pas nécessairement établie à partir du signal du capteur optique. En effet, la carte électronique peut être configurée pour établir la première commande de la fonction principale de l'équipement à moteur soit à partir d'un signal du capteur optique soit à partir d'un signal d'un autre capteur et en particulier du capteur de position de l'organe de commande (gâchette). La carte électronique peut également être configurée pour établir la première commande de la fonction principale à partir des signaux des deux capteurs.

En particulier, la carte électronique peut être configurée pour établir la première commande de la fonction principale de l'équipement à moteur à partir du signal du capteur optique et une deuxième commande de la fonction principale de l'équipement à moteur à partir du signal du capteur de position de l'organe de commande.

L'existence d'une commande redondante pour une même fonction peut être utile pour des équipements où la sécurité et la fiabilité de la commande est essentielle. La carte électronique, ou plus précisément un processeur de la carte, peut encore être configuré pour comparer la première et la deuxième commande de la fonction principale et pour piloter une mise en sécurité de l'équipement en cas de divergence de la première et de la deuxième commande. La mise en sécurité peut comporter le déclenchement d'un frein agissant sur l'organe actif ou le moteur, et la coupure de l'alimentation en énergie du moteur. A titre d'exemple, dans le cas de la commande d'une tronçonneuse thermique, si le moteur est en position de ralenti et alors que l'utilisateur n'a pas le doigt sur la gâchette, la présence d'un corps étranger tel qu'une branche intervenant de façon accidentelle dans la zone d'interface peut actionner la gâchette. La détection par le capteur optique d'un corps étranger actionnant la gâchette, c'est-à-dire un corps qui n'a pas les caractéristiques de couleur et de réflexion du doigt de l'utilisateur, peut alors être utilisée pour inhiber le signal du capteur lié à la gâchette.

Le dispositif de commande de l'invention est particulièrement adapté à des outils électriques portables, à batterie intégrée ou distante, comprenant un organe actif mobile, de préférence un organe de coupe, et une transmission reliant le moteur à l'organe actif.

L'invention concerne également un procédé de commande d'un équipement à moteur pourvu d'une interface de commande à capteur optique apte à mesurer la distance d'une cible. Le procédé comprend l'établissement d'une première commande d'une fonction principale de l'équipement à moteur, lorsque la cible est éloignée du capteur d'une distance comprise dans une première plage de distances. Le procédé comprend encore l'établissement d'une commande pour au moins une fonction supplémentaire de l'équipement à moteur, distincte de la fonction principale, lorsque la cible est éloignée du capteur d'une distance supérieure à la première plage de distances.

La cible de commande peut être, comme décrit précédemment un doigt de l'utilisateur.

Selon une mise en oeuvre particulière du procédé on établit la commande de la fonction principale à partir d'un signal de mesure de distance établi par le capteur optique et/ou à partir d'un signal établi par un capteur de position associé à un organe de commande de l'interface de commande. La commande peut aussi être établie en fonction d'une combinaison de ces signaux. La combinaison des signaux peut notamment être mise à profit pour la mise en sécurité de l'outil de la manière indiquée ci-dessus. L'organe de commande peut être la gâchette déjà évoquée.

D'autres caractéristiques et avantages de l'invention ressortent de la description des figures qui suit. Cette description est donnée à titre d'illustration et non de limitation.

### Brève description des figures

La figure 1 est une représentation schématique d'un dispositif de commande conforme à l'invention.
La figure 2 montre le dispositif de la figure 1 pourvu d'une gâchette.
La figure 3 est une vue avec écorché partiel de sa partie inférieure, d'un sécateur utilisant un dispositif de commande conforme à l'invention.

### Description détaillée de modes de mise en oeuvre de l'invention.

Dans la description qui suit, en référence aux figures des dessins, des parties identiques ou similaires sont repérées avec les mêmes signes de référence de sorte que l'on puisse se reporter d'une figure à l'autre.

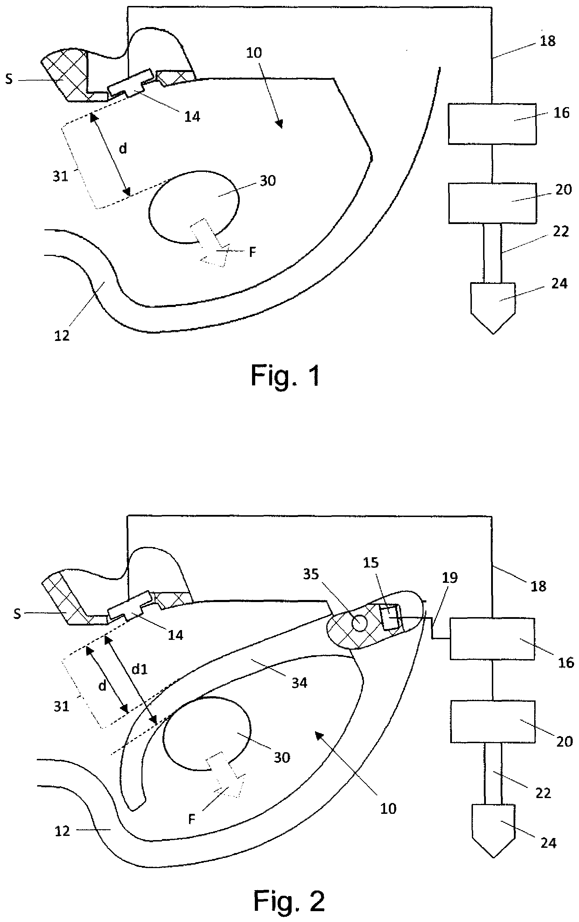

Le dispositif de commande de la figure 1 est utilisé pour commander un outil portatif S représenté très partiellement. Il présente une zone d'interface 10, délimitée par une garde 12 et le champ de mesure d'un capteur optique 14 ménagé dans le corps de l'outil S. Le capteur est relié à une carte électronique 16 par une liaison électrique 18. La liaison électrique 18, par exemple de type série, assure l'alimentation électrique du capteur et transmet à la carte électronique 16 un signal de mesure. La carte électronique 16 peut comporter le cas échéant une alimentation électrique du capteur optique 14.

La carte électronique élabore une commande pour un moteur 20 représenté très schématiquement. Il peut s'agir d'un courant d'alimentation, issu d'une batterie non représentée, contrôlé et appliqué aux différentes phases d'un moteur électrique. Il peut aussi s'agir d'une commande de l'admission d'un moteur thermique. Le moteur 20 est relié à un organe actif 24 de l'outil par l'intermédiaire d'une transmission 22. La transmission sert également à convertir la rotation du moteur en un mouvement adéquat pour l'actionnement de l'organe actif. L'organe actif peut être, par exemple, un outil de coupe.

La carte électronique 16, le moteur 20, la transmission 22 et l'organe actif 24, représentés très schématiquement sur la figure 1 sont intégrés à l'équipement ou à l'outil S dont ils font partie.

La référence 30 désigne une cible de mesure dont le capteur 14 mesure l'éloignement. Il s'agit, dans l'exemple de la figure, d'un doigt de l'utilisateur. Il s'agit, par exemple, d'un doigt de la main qui saisit l'outil ou une poignée de l'outil non représentée.

La cible 30 est représentée sur la figure à une distance d, indiquée par une double flèche, qui sépare la cible du capteur, ou plus précisément qui la sépare du corps d'outil à l'endroit du capteur. La distance d correspond à la distance proximale maximum évoquée dans la première partie de la description, c'est-à-dire la plus grande distance d'éloignement de la première plage de distances 31. La première plage de distance 31, qui gouverne l'établissement d'une commande de la fonction principale de l'outil, s'étend d'une valeur minimum à la valeur maximum d. La valeur minimum, qui peut être nulle, correspond à la distance mesurée lorsque la cible 30 est au plus proche du capteur 14, par exemple contre le capteur ou contre la paroi de la structure incluant le capteur. La valeur maximum, dans la première plage de distances, est la distance d, en l'occurrence la distance proximale maximum. Dans cette plage, le mouvement de la cible peut être utilisé pour établir la commande de la fonction principale. Il s'agit, par exemple, d'une commande progressive de la vitesse du moteur 20 ou une commande de la course d'un organe de coupe. On peut se référer à ce sujet à la description qui précède.

Une flèche F indique une excursion possible de la cible hors de la première plage de distances 31, tout en restant dans le champ de mesure du capteur et dans la zone d'interface 10. L'éloignement entre la cible 30 et le capteur 14 devient alors, au moins momentanément, supérieure à la valeur de distance d. Le signal de mesure d'une distance supérieure à la distance d, établi par le capteur est utilisé par la carte électronique 16 pour l'établissement d'une commande supplémentaire. Là aussi, et par référence à la description qui précède, il peut s'agir, par exemple, d'une modification d'une consigne de fonctionnement, d'une consigne de position d'un organe de coupe ou d'une consigne de vitesse de rotation du moteur.

La figure 2 montre un dispositif de commande comparable à la figure 1, mais qui dispose, dans la zone d'interface 10 d'un organe de commande. Dans l'exemple de la figure il s'agit d'une gâchette 34 actionnable par un doigt de l'utilisateur.

L'agencement relatif du capteur 14 et de la gâchette 34 est tel que le champ de mesure soit focalisé sur la gâchette 34. Ainsi la gâchette, ou tout au moins une partie d'extrémité de la gâchette dans le champ de mesure du capteur, constitue la cible. La distance mesurée par le capteur optique n'est plus l'éloignement du doigt mais celui de la gâchette.

Comme la gâchette sert de cible de mesure pour le capteur optique 14 sa position de repos peut être utilisée comme référence pour un étalonnage automatique de la valeur maximum d de la première plage de distances. La gâchette ne peut pas être éloignée davantage du capteur 14 hors de la première plage de distances, pour déclencher la commande de la fonction supplémentaire. Dans une telle mise en oeuvre du dispositif de commande, le champ de mesure du capteur 14 peut toutefois être prévu suffisamment large pour détecter la présence d'un doigt au niveau de la gâchette. Ceci permet alors de définir une distance d1 correspondant au doigt positionné sur la gâchette en position de repos à la distance d. La différence entre la distance d1 et la distance d correspond simplement à l'épaisseur de la gâchette. Ainsi, malgré l'impossibilité d'écarter la gâchette au-delà de la distance d, la détection de l'écartement du doigt au-delà de la distance d1 peut être utilisée pour le déclenchement de la fonction supplémentaire.

De préférence, la gâchette est munie en son centre d'une ouverture ou fente, permettant au capteur 14 d'établir directement et de façon plus fiable la distance d1, tout en étant capable d'étalonner la distance d. La distance d1 peut par ailleurs être établie directement par calcul dans la carte électronique en paramétrant les caractéristiques d'épaisseur de la gâchette.

La gâchette 34 peut être une commande factice. Elle peut être par exemple montée pivotante sur un pivot 35 et comprendre à ce niveau un système de rappel élastique connu en soi tel qu'un ressort. Elle peut alors servir de cible et de repère pour le doigt de l'utilisateur. Elle peut aussi fournir un rappel de force qui permet à l'utilisateur de mieux prendre conscience de la position de son doigt.

La gâchette peut aussi être reliée à un capteur de position 15, par exemple un capteur mesurant sa course angulaire autour du pivot 35. Le capteur 15 est alors relié à la carte électronique par une liaison électrique 19 appropriée par laquelle il fournit un signal de mesure à la carte électronique 16. Ainsi la carte électronique 16 peut être configurée pour établir la commande du moteur, et en particulier la commande de la fonction principale, soit à partir du signal du capteur de la gâchette, soit à partir du signal du capteur optique. Les deux signaux peuvent être utilisés de la manière déjà décrite.

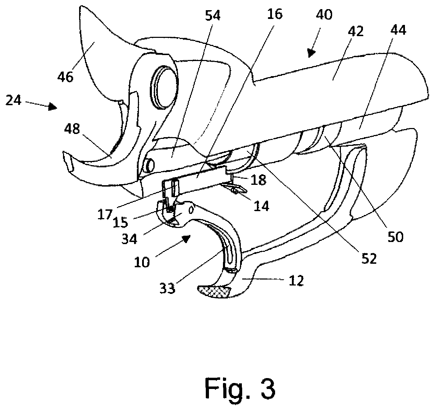

La figure 3 illustre une réalisation perfectionnée du dispositif de commande appliqué à un sécateur 40.

Le dispositif de commande est pourvu d'une gâchette 34 qui, tout comme la zone d'interface 10 est ménagée à proximité d'une partie du carter formant une poignée 42 du sécateur. Ainsi, le doigt de l'utilisateur, servant de cible, peut être un doigt de la main qui saisit la poignée 42.

La figure 3 montre, dans l'écorché partiel, un moteur électrique 44, et une transmission reliant le moteur à une lame mobile 46 du sécateur. La lame mobile 46 forme avec une lame fixe 48 l'organe actif 24.

La transmission comporte un réducteur 50, un mécanisme 52 de conversion de la rotation du moteur en une translation tel qu'une vis à bille, et des biellettes 54 reliant le mécanisme 52 à une came de la lame mobile.

On reconnaît également sur la figure 3 la carte électronique 16, équipée d'un microprocesseur, le capteur optique 14, relié à la carte par la liaison électrique 18, et le capteur 15 utilisé pour déterminer la position de la gâchette. Il s'agit ici d'un capteur à effet hall.

Le moteur électrique 44 est piloté par une autre carte électronique de commande située dans une unité d'alimentation à batterie d'accumulateurs non représentée. Cette carte électronique de commande pilote le moteur en fonction des commandes transmises par la carte électronique 16 située dans le corps du sécateur.

Un cordon de liaison, non représenté, assure la liaison électrique avec l'unité d'alimentation. Le cordon comprend des conducteurs électriques pour le pilotage du moteur, l'alimentation de la carte électronique du sécateur et le transfert de différents signaux de commande, par exemple par une liaison série.

Pour le sécateur 40 la commande de fonction principale établie par la carte est, par exemple, une commande de la rotation du moteur, et de son sens de rotation, pour provoquer le déplacement de la lame mobile vers la lame fixe, ou, inversement pour le retour de la lame mobile dans sa position de repos ouverte.

La commande de la fonction supplémentaire peut être une commande d'une consigne de course maximum de la lame mobile. Par exemple pour obtenir une course plus importante. Ces modes de fonctionnement sont décrits plus haut.

Selon un perfectionnement particulièrement avantageux du dispositif de commande, illustré par la figure 3, le capteur optique 14 présente un champ de mesure dans une direction prépondérante qui coïncide avec un ajourage 33 pratiqué dans la gâchette. L'ajourage se présente ici comme une fente longitudinale s'étendant sur une partie de la gâchette recevant un ou plusieurs doigts de la main de l'utilisateur.

Grâce à l'ajourage 33 la gâchette n'entrave pas la mesure du capteur optique qui peut se faire sur le ou les doigts utilisés comme cible, à l'instar du dispositif de la figure 1.

La position de repos de la gâchette est de préférence telle que le doigt se trouve à la distance proximale maximum, c'est-à-dire à l'extrémité de la première plage de distance lorsqu'il est simplement posé sur la gâchette au repos. La course de la gâchette à partir de la position de repos se fait en direction du capteur 14 dans la première plage de distances. Cette course correspond à la plage pour laquelle est établie la commande de la fonction principale. Pour une commande de la fonction supplémentaire, le doigt, qui constitue la cible, s'écarte de la gâchette qui est en position de repos.

## Revendications

1. Dispositif de commande pour un équipement à moteur, comprenant au moins un capteur (14, 15) et une carte électronique (16) de commande de l'équipement en fonction d'au moins un signal du capteur, dans lequel le capteur électronique est un capteur optique (14), sans contact, ménagé dans une zone d'interface (10) du dispositif de commande, configuré pour mesurer une distance séparant au moins une cible (30), se trouvant dans la zone d'interface (10), et le capteur optique (14), la carte électronique (16) étant configurée pour établir une première commande d'une fonction principale de l'équipement à moteur, lorsqu'un signal du capteur optique est établi pour une distance mesurée dans une première plage de distances (31), et pour établir une commande pour au moins une fonction supplémentaire de l'équipement à moteur, distincte de la fonction principale, lorsqu'un signal du capteur optique est établi pour une distance de mesure supérieure à la première plage de distances (31).

2. Dispositif de commande selon la revendication 1, dans lequel le dispositif de commande comporte en outre un organe de commande (34) ménagé dans la zone d'interface (10).

3. Dispositif de commande selon la revendication 2, comprenant un capteur de position (15) associé à l'organe de commande (34), le capteur de position étant relié à la carte électronique (16).

4. Dispositif de commande selon la revendication 2, dans lequel l'organe de commande présente une course limitée à la première plage de distances.

5. Dispositif de commande selon l'une des revendications précédentes, dans lequel la carte électronique (16) est configurée pour établir la première commande de la fonction principale de l'équipement à moteur à partir du signal du capteur optique.

6. Dispositif selon la revendication 3, dans lequel la carte électronique est configurée pour établir la première commande de la fonction principale de l'équipement à moteur à partir d'un signal de l'un du capteur optique (14) et du capteur de position (15).

7. Dispositif de commande selon la revendication 3, dans lequel la carte électronique (16) est configurée pour établir la première commande de la fonction principale de l'équipement à moteur à partir du signal du capteur optique (14) et une deuxième commande de la fonction principale de l'équipement à moteur à partir du signal du capteur de position (15) de de l'organe de commande (34).

8. Dispositif de commande selon la revendication 7, dans lequel la carte électronique (16) est configurée pour comparer la première et la deuxième commande de la fonction principale et pour piloter une mise en sécurité de l'équipement en cas de divergence de la première et de la deuxième commande.

9. Dispositif de commande selon la revendication 3, dans lequel la cible (30) comprend au moins un doigt d'un utilisateur et dans lequel l'organe de commande (34) comprend une gâchette actionnable par le doigt de l'utilisateur, la gâchette présentant une course maximale entre une position relâchée et une position enfoncée , dans lequel la première plage de distances (31) correspond à la course maximale de la gâchette.

10. Dispositif de commande selon la revendication 2, dans lequel la cible comprend au moins un doigt d'un utilisateur et dans lequel l'organe de commande (34) comprend une gâchette actionnable par le doigt de l'utilisateur, la gâchette étant située dans un champ de mesure du capteur optique et présentant un ajourage (33) dans une zone d'appui pour le doigt de l'utilisateur, l'ajourage étant aligné sur le champ de mesure du capteur optique.

11. Dispositif de commande selon la revendication 2 dans lequel la cible (30) comprend l'organe de commande (34).

12. Dispositif de commande selon l'une quelconque des revendications précédentes pour un outil portatif à moteur, dans lequel la commande de la fonction principale est une commande proportionnelle de la vitesse de rotation du moteur jusqu'à une consigne de vitesse maximum et dans lequel la commande supplémentaire est au moins l'une parmi une commande de changement de la consigne de vitesse de rotation maximum du moteur, une commande de changement de mode de fonctionnement, une commande de mise en sécurité, et une commande d'inversion d'un sens de rotation du moteur.

13. Dispositif de commande selon l'une des revendications 1 à 10 pour un outil choisi parmi un sécateur et une cisaille électriques, dans lequel la commande de la fonction principale est une commande de la course d'une lame mobile (46) de l'outil entre une position d'ouverture maximum fixée par une consigne et une position de fermeture.

14. Dispositif de commande selon la revendication 13, dans lequel la commande pour la fonction supplémentaire est une commande de changement de la consigne de course d'ouverture maximum de la lame mobile (46).

15. Outil électrique portable, comprenant un moteur électrique (44), un organe actif mobile (46), et une transmission (50, 52, 54, 56) reliant l'organe actif au moteur, et un dispositif de commande selon l'une quelconque des revendications 1 à 10.

16. Procédé de commande d'un équipement à moteur pourvu d'une interface de commande à capteur optique (14) apte à mesurer la distance d'au moins une cible (30), comprenant l'établissement d'une première commande d'une fonction principale de l'équipement à moteur, lorsque la cible est éloignée du capteur d'une distance comprise dans une première plage de distances (31) et comprenant l'établissement d'une commande pour au moins une fonction supplémentaire de l'équipement à moteur, distincte de la fonction principale, lorsque la cible (30) est éloignée du capteur d'une distance supérieure à la première plage de distances (31).

17. Procédé selon la revendication 16, dans lequel on établit la commande de la fonction principale à partir de l'un parmi : le signal de mesure de distance établi par le capteur optique (14), un signal établi par un capteur de position (15) associé à un organe de commande (34) de l'interface de commande, et une combinaison des signaux du capteur optique (14) et du capteur de position (15).

## Patentansprüche

1. Steuerungsvorrichtung für eine angetriebene Einrichtung, umfassend zumindest einen Sensor (14,15) und eine Steuerungsleiterplatte (16) der Einrichtung in Abhängigkeit von zumindest einem Sensorsignal, wobei der elektronische Sensor ein kontaktloser optischer Sensor (14) ist, der in einem Schnittstellenbereich (10) der Steuerungsvorrichtung angeordnet und konfiguriert ist, um eine Entfernung zu messen, die zumindest ein Ziel (30), das sich in dem Schnittstellenbereich (10) befindet, von dem optischen Sensor (14) trennt, wobei die Leiterplatte (16) konfiguriert ist, um einen ersten Befehl einer Hauptfunktion der angetriebenen Einrichtung einzustellen, wenn ein Signal des optischen Sensors für eine Entfernung eingestellt ist, die in einem ersten Entfernungsbereich (31) gemessen ist, und um einen Befehl für zumindest eine zusätzliche Funktion der angetriebenen Einrichtung einzustellen, die sich von der Hauptfunktion unterscheidet, wenn das Signal des optischen Sensors für eine Messentfernung eingestellt ist, die größer ist als der erste Entfernungsbereich (31).

2. Steuerungsvorrichtung nach Anspruch 1, wobei die Steuerungsvorrichtung ferner einen Aktor (34) beinhaltet, der in dem Schnittstellenbereich (10) bereitgestellt ist.

3. Steuerungsvorrichtung nach Anspruch 2, umfassend einen Positionssensor (15), der dem Aktor (34) zugeordnet ist, wobei der Positionssensor mit der Leiterplatte (16) verbunden ist.

4. Steuerungsvorrichtung nach Anspruch 2, wobei der Aktor eine Bewegungsbahn aufweist, die auf den ersten Entfernungsbereich beschränkt ist.

5. Steuerungsvorrichtung nach einem der vorangehenden Ansprüche, wobei die Leiterplatte (16) konfiguriert ist, um den ersten Befehl der Hauptfunktion der angetriebenen Einrichtung ab dem Signal des optischen Sensors einzustellen.

6. Vorrichtung nach Anspruch 3, wobei die Leiterplatte konfiguriert ist, um den ersten Befehl der Hauptfunktion der angetriebenen Einrichtung ab einem Signal von einem von dem optischen Sensor (14) und dem Positionssensor (15) einzustellen.

7. Steuerungsvorrichtung nach Anspruch 3, wobei die Leiterplatte (16) konfiguriert ist, um den ersten Befehl der Hauptfunktion der angetriebenen Einrichtung ab dem Signal des optischen Sensors (14) einzustellen und einen zweiten Befehl der Hauptfunktion der angetriebenen Einrichtung ab dem Signal des Positionssensors (15) des Aktors (34) einzustellen.

8. Steuerungsvorrichtung nach Anspruch 7, wobei die Leiterplatte (16) konfiguriert ist, um den ersten mit dem zweiten Befehl der Hauptfunktion zu vergleichen und um in einem Fall, in dem der erste von dem zweiten Befehl abweicht, ein Übergehen der Einrichtung in den Sicherheitsmodus zu steuern.

9. Steuerungsvorrichtung nach Anspruch 3, wobei das Ziel (30) zumindest einen Finger eines Benutzers umfasst und wobei der Aktor (34) einen Auslöser umfasst, der durch den Finger des Benutzers betätigt werden kann, wobei der Auslöser eine maximale Bewegungsbahn zwischen einer gelösten Position und einer verriegelten Position aufweist, wobei der erste Entfernungsbereich (31) der maximalen Bewegungsbahn des Auslösers entspricht.

10. Steuerungsvorrichtung nach Anspruch 2, wobei das Ziel zumindest einen Finger eines Benutzers umfasst und wobei der Aktor (34) einen Auslöser umfasst, der durch den Finger des Benutzers betätigt werden kann, wobei der Auslöser in einem Messbereich des optischen Sensors angeordnet ist und eine Einstanzung (33) in einem Auflagebereich für den Finger des Benutzers aufweist, wobei der Auflagebereich in dem Messbereich des optischen Sensors ausgerichtet ist.

11. Steuerungsvorrichtung nach Anspruch 2, wobei das Ziel (30) den Aktor (34) umfasst.

12. Steuerungsvorrichtung nach einem der vorangehenden Ansprüche für ein angetriebenes Handwerkzeug, wobei der Befehl der Hauptfunktion ein proportionaler Befehl der Motordrehzahl bis zu einem Sollwert für die Maximaldrehzahl ist und wobei der zusätzliche Befehl zumindest einer von Folgenden ist: ein Befehl zur Änderung des Sollwerts für die maximale Motordrehzahl, ein Befehl zur Änderung des Betriebsmodus, ein Befehl zum Übergehen in den Sicherheitsmodus und einen Befehl zum Umkehren der Drehrichtung des Motors.

13. Steuerungsvorrichtung nach einem der Ansprüche 1 bis 10 für ein Werkzeug, das aus einer Baumschere und einem Heckenschneider ausgewählt ist, wobei der Befehl der Hauptfunktion ein Befehl der Bewegungsbahn einer beweglichen Klinge (46) des Werkzeugs zwischen einer maximal geöffneten Position, die durch einen Sollwert festgelegt ist, und einer geschlossenen Position ist.

14. Steuerungsvorrichtung nach Anspruch 13, wobei der Befehl für die zusätzliche Funktion ein Befehl zur Änderung des Sollwerts der Bewegungsbahn zur maximalen Öffnung der beweglichen Klinge (46) ist.

15. Elektrisches Handwerkzeug, umfassend einen Elektromotor (44), ein bewegliches aktives Element (46) und ein Getriebe (50, 52, 54, 56), welches das aktive Element mit dem Motor verbindet, sowie eine Steuerungsvorrichtung nach einem der Ansprüche 1 bis 10.

16. Steuerungsverfahren für eine angetriebene Einrichtung, die mit einer Steuerschnittstelle zu einem optischen Sensor (14) ausgestattet ist, der zum Messen der Entfernung zu zumindest einem Ziel (30) ausgebildet ist, umfassend Einstellen eines ersten Befehls einer Hauptfunktion der angetriebenen Einrichtung, bis das Ziel um eine Entfernung von dem Sensor beabstandet ist, die in einem ersten Entfernungsbereich (31) eingeschlossen ist, und umfassend Einstellen eines Befehls für zumindest eine zusätzliche Funktion der angetriebenen Einrichtung, die sich von der Hauptfunktion unterscheidet, bis das Ziel (30) um eine Entfernung von dem Sensor beabstandet ist, die größer ist als der erste Entfernungsbereich (31).

17. Verfahren nach Anspruch 16, wobei der Befehl der Hauptfunktion ab einem von Folgenden eingestellt wird: dem für den optischen Sensor (14) eingestellte Entfemungsmesssignal, einem für einen Positionssensor (15) eingestelltes Signal, das einem Aktor (34) der Steuerungsschnittstelle zugeordnet ist, und einer Kombination aus dem Signal des optischen Sensors (14) und dem des Positionssensors (15).

## Claims

1. A control device for an article of motor-powered equipment comprising at least one sensor (14, 15) and an electronic board (16) for controlling the article of equipment in dependence on at least one signal from the sensor, in which
the electronic sensor is a contactless optical sensor (14) provided in an interface region (10) of the control device and configured to measure a distance separating at least one target (30) which is in the interface region (10) and the optical sensor (14), the electronic board (16) being configured to establish a first control of a main function of the article of motor-powered equipment when a signal from the optical sensor is established for a measured distance in a first range of distances (31) and to establish a control for at least one additional function of the article of motor-powered equipment that is different from the main function when a signal from the optical sensor is established for a measurement distance greater than the first range of distances (31).

2. A control device according to claim 1 wherein the control device further comprises a control member (34) provided in the interface region (10).

3. A control device according to claim 2 comprising a position sensor (15) associated with the control member (34), the position sensor being connected to the electronic board (16).

4. A control device according to claim 2 wherein the control member has a travel limited to the first range of distances.

5. A control device according to one of the preceding claims wherein the electronic board (6) is configured to establish the first control of the main function of the article of motor-powered equipment from the signal from the optical sensor.

6. A device according to claim 3 wherein the electronic board is configured to establish the first control of the main function of the article of motor-powered equipment from a signal from one of the optical sensor (14) and the position sensor (15).

7. A control device according to claim 3 wherein the electronic board (16) is configured to establish the first control of the main function of the article of motor-powered equipment from the signal from the optical sensor (14) and a second control of the main function of the article of motor-powered equipment from the signal from the position sensor (15) of the control member (34).

8. A control device according to claim 7 wherein the electronic board (16) is configured to compare the first and second controls of the main function and to implement a security procedure for the article of equipment in the event of a divergence between the first and second controls.

9. A control device according to claim 3 wherein the target (30) comprises at least one finger of the user and wherein the control member (34) comprises a trigger actuable by the finger of the user, the trigger having a maximum travel between a released position and a depressed position in which the first range of distances (31) corresponds to the maximum travel of the trigger.

10. A control device according to claim 2 wherein the target comprises at least one finger of the user and wherein the control member (34) comprises a trigger actuable by the finger of the user, the trigger being disposed in a measurement field of the optical sensor and having an aperture (33) in the support region for the finger of the user, the aperture being aligned with the measurement field of the optical sensor,

11. A control device according to claim 2 wherein the target (30) comprises the control member (34).

12. A control device according to any one of the preceding claims for a portable motor-powered tool wherein control of the main function is a proportional control of the speed of rotation of the motor up to a maximum speed set point and wherein the additional control is at least one among a control for changing the maximum rotary speed set point of the motor, a control for changing the mode of operation, a control for implementing the security procedure and a control for reversal of a direction of rotation of the motor.

13. A control device according to one of claims 1 to 10 for a tool selected from electric shears and trimmer, wherein the control of the main function is a control of the travel of a moveable blade (46) of the tool between a maximum open position fixed by a set point and a closed position.

14. A control device according to claim 13 wherein the control for the additional function is a control for changing the maximum opening travel set point of the moveable blade (46).

15. A portable electric tool comprising an electric motor (44), a moveable active member (46) and a transmission (50, 52, 54, 56) connecting the active member to the motor and a control device according to any one of claims 1 to 10.

16. A process for controlling an article of motor-powered equipment provided with a control interface having an optical sensor (14) capable of measuring the distance of at least one target (30), comprising the establishment of a first control of a main function of the article of motor-powered equipment when the target is remote from the sensor by a distance contained in a first range of distances (31) and comprising the establishment of a control for at least one additional function of the article of motor-powered equipment, that is different from the main function, when the target (30) is remote from the sensor by a distance greater than the first range of distances (31).

17. A process according to claim 16 wherein the control of the main function is established from one among: the distance measurement signal established by the optical sensor (14), a signal established by a position sensor (15) associated with a control member (34) of the control interface, and a combination of the signals from the optical sensor (14) and the position sensor (15).
